# FASCICULE DE BREVET EUROPEEN

(11) **EP 1 559 259 B1**
(45) Date de publication et mention de la délivrance du brevet: **03.02.2016**
(21) Numéro de dépôt: 03810493.1
(22) Date de dépôt: 10.10.2003
(51) Int. Cl.: H04L 29/06, H04L 29/08, H04W 4/00

(54) **DISPOSITIF ET PROCEDE DE GESTION DE DONNEES ENTRE EQUIPEMENTS DE COMMUNICATION EN VUE DE L OBTENTION D UN SERVICE MOBILE**
EINRICHTUNG UND VERFAHREN ZUR VERWALTUNG VON DATEN ZWISCHEN KOMMUNIKATIONSEINRICHTUNGEN ZUR ERHALTUNG EINES MOBILDIENSTES
DEVICE AND METHOD FOR MANAGING DATA BETWEEN COMMUNICATION FACILITIES TO OBTAIN A MOBILE SERVICE

(30) Priorité: 25.10.2002 FR 0213387
(43) Date de publication de la demande: 03.08.2005
(73) Titulaire: INRIA - Institut National de Recherche en Informatique et en Automatique, 78153 Le Chesnay Cedex (FR)
(72) Inventeur: BANATRE, Michel, F-35111 La Fresnais (FR); CABILLIC, Gilbert, F-35530 Brece (FR); COUDERC, Paul, F-56354 Plouharnel (FR)
(74) Mandataire: Cabinet Netter
(86) Numéro de dépôt international: PCT/FR2003/002997
(87) Numéro de publication internationale: WO 2004/043035

(56) Documents cités:
- EP-A- 1 085 696
- WO-A-02/078381
- JP-A- 2002 109 689
- US-A- 5 611 050
- PATENT ABSTRACTS OF JAPAN vol. 1998, no. 05, 30 avril 1998 (1998-04-30) & JP 10 011699 A (NIPPON DENKI IDO TSUSHIN KK), 16 janvier 1998 (1998-01-16)
- MURPHY A L ET AL: "LIME: a middleware for physical and logical mobility" PROCEEDINGS 21ST INTERNATIONAL CONFERENCE ON DISTRIBUTED COMPUTING SYSTEMS, PROCEEDINGS 21ST INTERNATIONAL CONFERENCE ON DISTRIBUTED COMPUTING SYSTEMS, MESA, AZ, USA, 16-19 APRIL 2001, pages 524-533, XP002244666 2001, Los Alamitos, CA, USA, IEEE Comput. Soc, USA ISBN: 0-7695-1077-9
- BANÂTRE M. , COUDERC P.: "Ambient computing applications: an experience with the SPREAD apporach" PROCEEDINGS OF THE 36TH HAWAII INTERNATIONAL CONFERENCE ON SYSTEM SCIENCES (HICSS'03), [en ligne] - 9 janvier 2003 (2003-01-09) pages 291-299, XP002244667 Extrait de l'Internet: <URL:http://ieeexplore.ieee.org> [extrait le 2003-06-17]

## Description

L'invention concerne le domaine des équipements de communication, et plus particulièrement la gestion de données échangées entre des stations mobiles d'utilisateurs et d'autres types d'équipements fixes ou mobiles afin d'obtenir un service.

On entend ici par « obtenir un service » le fait d'obtenir des informations ou des renseignements ou d'initier ou effectuer une procédure comme par exemple un achat, une réservation, une livraison ou une prise en charge par un véhicule.

Grâce à l'avènement des réseaux de communications mobiles, et notamment des réseaux GSM/GPRS et UMTS, de très nombreuses personnes peuvent obtenir des services à distance en établissant une communication entre leur station mobile, telle qu'un téléphone mobile ou un assistant personnel numérique (ou PDA), et un équipement de communication distant, tel qu'un serveur, une station mobile ou un ordinateur.

Il existe cependant de nombreuses situations dans lesquelles une personnel (ou utilisateur) équipé(e) d'une station mobile ne peut pas obtenir le service qu'elle désire. C'est notamment le cas dans le domaine des transports en commun et dans le domaine de la fourniture d'informations ou de renseignements dans certains lieux publics ou privés très fréquentés. Par exemple, une personne à mobilité restreinte, qui se dirige vers un arrêt d'autobus, n'a pas la possibilité d'indiquer au prochain autobus qui dessert cet arrêt qu'elle souhaite qu'il la prenne en charge. Cette situationest encore plus ennuyeuse dans le cas d'un mal-voyant ou d'un mal-entendant, puisque le premier ne peut ni apercevoir l'autobus, ni reconnaître le numéro de la ligne qu'emprunte un autobus qu'il aurait entendu arriver, et le second ne peut pas entendre qu'un autobus arrive. Par ailleurs, dans certains lieux publics ou privés, tels que les aéroports, les gares ferroviaires ou les centres commerciaux, il est fréquent de trouver des bornes d'information désertées par le personnel chargé d'y fournir des informations ou des renseignements.

Le document WO 02/078381 décrit un système pour fournir des informations relatives à la localisation à des dispositifs de télécommunication mobile.

L'abrégé du document JP 10011699 décrit un système de localisation de bus.

Le document JP 2002 109 689 A propose un système permettant qu'un utilisateur de bus situé à un arrêt de bus soit informé de l'arrivée prochaine de bus qu'il attend et permettant d'informer le conducteur de bus qu'un arrêt du bus est souhaité à cet arrêt de bus.

L'invention a donc pour but d'améliorer la situation, en proposant une solution permettant de remédier à certains des inconvénients précités.

L'invention est définie dans les revendications indépendantes 1 et 13.

Elle propose à cet effet un procédé de gestion de données entre des stations mobiles d'utilisateurs équipées d'un module de communication, des bornes fixes associées à au moins un service, et une multiplicité de moyens de service mobiles équipés d'un module de communication et aptes à assurer ledit service.

Ce procédé se caractérise par le fait qu'il comprend :
- une première étape dans laquelle on génère, à l'aide d'une station mobile d'utilisateur, une requête primaire comportant des données qui définissent une demande d'obtention d'un service choisi (comme par exemple l'arrêt d'un autobus) au niveau d'une borne (par exemple agencée sous la forme d'un « abri-bus » ou d'une partie d'un abri-bus) installée à proximité de la station mobile et associée au service demandé,
- une deuxième étape dans laquelle, après avoir reçu la requête primaire, on génère une requête secondaire comportant des données qui définissent une demande de réalisation du service choisi au niveau de la borne proche de la station mobile,
- une troisième étape dans laquelle on réceptionne la requête secondaire au niveau du moyen de service mobile le plus proche de la borne désignée, de sorte qu'il s'arrête au niveau de cette borne et assure le service demandé par l'utilisateur de la station mobile qui a émis la requête primaire.

Bien entendu, lorsque le moyen de service mobile est déjà arrêté au niveau de la borne désignée, il peut immédiatement assurer le service demandé.

Dans un premier mode de mise en oeuvre, lors de la première étape on réceptionne la requête primaire au niveau de la borne et on génère la requête secondaire au niveau de cette borne. Dans ce cas, la réception de la requête primaire survient de préférence lorsque la station mobile qui l'a générée se trouve placée à l'intérieur de la « seconde » zone de couverture d'émission de la borne. Par exemple, les génération et réception de la requête primaire (pendant les première et seconde étapes) peuvent s'effectuer par échanges spontanés de messages, dans le cadre de ce que l'homme de l'art appelle un « système d'information spatial ». La requête primaire comporte alors des données qui définissent une valeur spatiale primaire représentative du service choisi par l'utilisateur.

Par ailleurs, dans ce premier mode de mise en oeuvre, le moyen de service mobile (par exemple un véhicule de transport) reçoit préférentiellement la requête secondaire (pendant la troisième étape) lorsque la borne désignée se trouve placée à l'intérieur de sa troisième zone de couverture d'émission. De nouveau, les génération et réception de la requête secondaire (pendant les deuxième et troisième étapes) peuvent s'effectuer par échanges spontanés de messages, toujours dans le cadre d'un système d'information spatial. La requête secondaire comporte alors des données qui définissent une valeur spatiale secondaire représentative du service choisi par l'utilisateur.

Dans un second mode de mise en oeuvre, lors de la deuxième étape on réceptionne la requête primaire au niveau d'un serveur de gestion, puis on détermine d'une part, la position de la borne à proximité de la station mobile de l'utilisateur (qui a émis la requête primaire), et d'autre part, le moyen de service mobile qui est le plus proche de cette borne et qui est apte à réaliser le service défini dans la requête primaire, et enfin on adresse à ce moyen de service mobile la requête secondaire à l'aide du serveur.

Dans ce cas, la détermination de la position du mobile le plus proche (lors de la deuxième étape) peut consister à adresser à tous les moyens de service mobiles une requête auxiliaire leur demandant de fournir leurs positions respectives, puis, à réception des réponses fournies par les différents moyens de service mobiles, à déduire de ces réponses le moyen de service mobile qui est situé le plus près de la borne et qui est apte à réaliser le service défini dans la requête primaire. En variante, la détermination de la position du moyen de service mobile le plus proche (lors de la deuxième étape) s'effectue par confrontation des positions respectives des différents moyens de service mobiles, aptes à réaliser le service défini dans la requête primaire, à la position de la borne. Dans un cas comme dans l'autre, soit la requête primaire comporte la position de la station mobile de l'utilisateur et l'on déduit la position de la borne de celle de la station mobile, soit la requête primaire comporte un identifiant représentatif au moins de la position de la borne et l'on déduit au moins la position de la borne de l'identifiant reçu.

Par ailleurs, on peut envisager qu'après avoir reçu la requête primaire on adresse des informations à la station mobile, comme par exemple le temps nécessaire au moyen de service mobile le plus proche pour parvenir au niveau de la borne, ou des informations publicitaires, ou encore des données d'information définissant au moins une adresse de site d'information accessible par Internet.

Un tel procédé trouve des applications particulièrement intéressantes notamment dans le domaine des transports en commun, et plus particulièrement lorsque, d'une part, les moyens de service mobiles sont des véhicules de transport en commun, tels que des autobus ou des autocars, et d'autre part, les bornes constituent tout ou partie des arrêts d'autobus (ou abri-bus).

L'invention porte également sur un dispositif de gestion de données entre au moins une station mobile d'utilisateur équipée d'un module de communication, des bornes fixes associées à au moins un service, et une multiplicité de moyens de service mobiles équipés d'un module de communication et aptes à assurer le service.

Le dispositif se caractérise par le fait qu'il comprend, d'une première part, des premiers moyens de contrôle destinés à être implantés dans la station mobile d'un utilisateur et capables, sur ordre de cet utilisateur, de générer une requête primaire comportant des données qui définissent une demande d'obtention d'un service choisi au niveau d'une borne installée à proximité de la station mobile et associée au service choisi, d'une deuxième part, des deuxièmes moyens de contrôle capables, lorsqu'ils reçoivent une requête primaire, de générer une requête secondaire comportant des données qui définissent une demande de réalisation du service choisi au niveau de la borne, et d'une troisième part, des troisièmes moyens de contrôle implantés dans chacun des moyens de service mobiles et capables, lorsqu'ils reçoivent une requête secondaire du module de communication associé, d'ordonner l'arrêt des moyens de service mobiles associés au niveau de la borne désignée de manière à assurer le service demandé par l'utilisateur de la station mobile.

Bien entendu, comme indiqué précédemment en référence au procédé, lorsque le moyen de service mobile est déjà arrêté au niveau de la borne désignée, on lui ordonne de rester arrêté pour assurer le service demandé.

Dans un premier mode de réalisation, chaque borne est équipée d'un module de communication et comporte des deuxièmes moyens de contrôle.

Dans ce cas, les modules de communication de la station mobile et de la borne présentent respectivement, de préférence, une première et une deuxième zones de couverture d'émission, et les modules de communication des bornes sont capables de réceptionner une requête primaire lorsque la station mobile qui l'a générée se trouve placée à l'intérieur de leur « seconde » zone de couverture d'émission.

Par exemple, les modules de communication de la station mobile et des bornes peuvent être respectivement agencés de manière à générer et réceptionner la requête primaire par échanges spontanés de messages contenant des données délivrées par les premiers et deuxièmes modules de contrôle, dans le cadre d'un système d'information spatial. Les premiers moyens de contrôle sont alors préférentiellement agencés de manière à générer des requêtes primaires qui comportent des données définissant une valeur spatiale primaire représentative du service choisi par l'utilisateur.

Par ailleurs, dans ce premier mode de réalisation, le module de communication de chacun des moyens de service mobiles présente préférentiellement une troisième zone de couverture d'émission et est capable de réceptionner une requête secondaire lorsque la borne désignée se trouve placée à l'intérieur de leur troisième zone de couverture d'émission. De nouveau, les modules de communication des bornes et des moyens de service mobiles sont préférentiellement agencés, respectivement, de manière à transmettre et à réceptionner une requête secondaire par échanges spontanés de messages contenant des données délivrées par les deuxièmes et troisièmes modules de contrôle, dans le cadre d'un système d'information spatial. Les deuxièmes moyens de contrôle sont alors préférentiellement capables de générer des requêtes secondaires comportant des données secondaires qui définissent une valeur spatiale secondaire représentative du service choisi.

Dans un second mode de réalisation, les deuxièmes moyens de contrôle peuvent être implantés dans un serveur équipé d'un module de communication et sont capables, lorsqu'ils reçoivent une requête primaire, de déterminer, d'une part, au moins la position de la borne située à proximité de la station mobile de l'utilisateur, et d'autre part, le moyen de service mobile le plus proche de cette borne et apte à réaliser le service défini dans la requête primaire, et d'adresser à ce moyen de service mobile la requête secondaire, via le module de communication associé.

Dans ce cas, les seconds moyens de contrôle peuvent être capables, lorsqu'ils reçoivent une requête primaire du module de communication associé, d'adresser à tous les moyens de service mobiles une requête auxiliaire leur demandant de fournir leurs positions respectives, puis, lorsqu'ils reçoivent leurs réponses, d'en déduire le moyen de service mobile qui est situé le plus près de la borne et qui est apte à réaliser le service défini dans la requête primaire. En variante, les seconds moyens de contrôle peuvent être capables, lorsqu'ils reçoivent une requête primaire du module de communication associé, de confronter les positions respectives des différents moyens de service mobiles, aptes à réaliser le service défini dans la requête primaire, à la position de la borne, de manière à déterminer le moyen de service mobile situé le plus près de cette borne. Dans un cas comme dans l'autre, soit les deuxièmes moyens de contrôle peuvent être capables de déterminer la position d'une station mobile ayant émis une requête primaire et d'en déduire la position de la borne, soit les premiers moyens de contrôle peuvent être capables d'intégrer dans la requête primaire un identifiant représentatif au moins de la position de la borne, et les deuxièmes moyens de contrôle sont agencés de manière à déduire de l'identifiant contenu dans une requête primaire reçue au moins la position de la borne associée.

Par ailleurs, les deuxièmes moyens de contrôle peuvent être agencés, lorsqu'ils ont reçu une requête primaire, pour permettre la communication d'informations à la station mobile ayant émis cette requête primaire. De telles informations peuvent être, par exemple, déterminées par les deuxièmes moyens de contrôle et représentatives du temps nécessaire au moyen de service mobile le plus proche pour parvenir au niveau de la borne. Mais il peut également s'agir d'informations publicitaires ou de données d'information définissant au moins une adresse de site d'information accessible par Internet.

L'invention concerne également, d'une première part, une station mobile, telle qu'un téléphone mobile ou un assistant personnel numérique (ou PDA pour « Personal Digital Assistant »), équipée d'un module de communication et de premiers moyens de contrôle d'un dispositif du type de celui présenté ci-avant, d'une deuxième part, une borne, par exemple destinée à être implantée dans un lieu public tel qu'un arrêt d'autobus ou d'autocar, un aéroport ou une gare ferroviaire, et équipée d'un module de communication et de deuxièmes moyens de contrôle d'un dispositif du type de celui présenté ci-avant, d'une troisième part, un véhicule de transport en commun, tel qu'un autobus ou un autocar, équipé d'un module de communication et de troisièmes moyens de contrôle d'un dispositif du type de celui présenté ci-avant.

D'autres caractéristiques et avantages de l'invention apparaîtront à l'examen de la description détaillée ci-après, et des dessins annexés, sur lesquels :
- les figures 1A à 1D illustrent de façon schématique quatre phases d'un premier exemple de mise en oeuvre de l'invention, dans une application à la gestion des lignes d'autobus, et
- les figures 2A et 2B illustrent de façon schématique deux phases d'un second exemple de mise en oeuvre de l'invention, également dans une application à la gestion des lignes d'autobus.

Les dessins annexés pourront non seulement servir à compléter l'invention, mais aussi contribuer à sa définition, le cas échéant.

Comme indiqué dans l'introduction, l'invention concerne la gestion de données entre une ou plusieurs stations mobiles de communication appartenant à des utilisateurs, des bornes fixes associées à un ou plusieurs services, et une multiplicité de moyens de service mobiles équipés d'un module de communication et aptes à assurer au moins l'un des services.

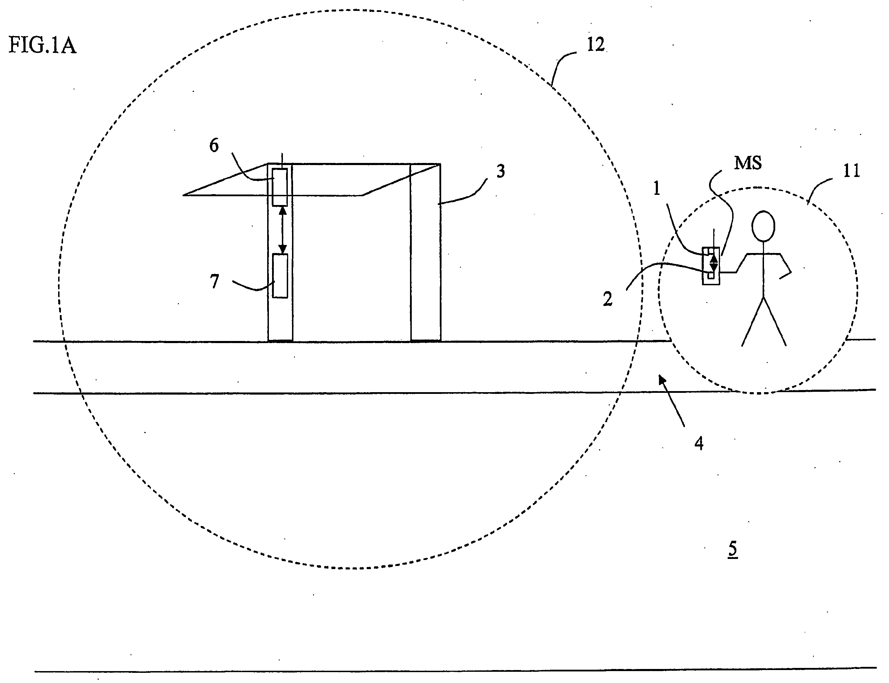

Elle propose pour ce faire un dispositif de gestion du type de celui illustré sur les figures 1A à 1D, à titre de premier exemple de réalisation. Cet exemple de réalisation concerne la gestion des arrêts des autobus (ou autocars) au niveau des zones d'arrêts (ou "abri-bus") des lignes qu'ils empruntent.

Bien entendu, l'invention n'est pas limitée à ce type d'application. Elle concerne d'une marnière générale la commande d'un service, réalisable par des moyens de service mobiles au niveau d'une borne fixe associée audit service, à l'aide d'une station mobile de communication placée à proximité de cette borne fixe. Elle concerne par conséquent le domaine des transports en commun dans lequel les arrêts des véhicules (autobus ou autocars), qui constituent les moyens de service mobiles, sont signalés par des bornes (ou abri-bus) fixes sur des lignes (ou trajets) connu(e)s. Mais, elle concerne également le domaine de la fourniture d'informations ou de renseignements à des personnes équipées d'une station mobile, au niveau de bornes (ou postes d'information) fixes, par du personnel équipé d'un dispositif de communication.

Dans l'exemple illustré sur les figures 1A à 1D, les utilisateurs sont équipés d'une station mobile MS comprenant un module de communication 1 couplé à un premier module de contrôle 2 destiné à générer des requêtes primaires de demande d'obtention de service au niveau d'un abri-bus d'une ligne d'autobus. La station mobile MS peut donc être un téléphone mobile ou un assistant personnel numérique (ou PDA). Mais, d'une manière générale, il peut s'agir de tout type de matériel mobile équipé d'un module de communication, comme par exemple un ordinateur portable.

Ces requêtes primaires sont transmises, dans des conditions que l'on verra plus loin, à des bornes fixes 3, qui se trouvent placées dans le voisinage des stations mobiles MS, par leurs modules de communication 1.

Dans cet exemple, les bornes fixes 3 sont des abri-bus, placés en des endroits choisis d'une ligne d'autobus, par exemple sur des trottoirs 4 bordant des voies de circulation 5, et comportent chacune un module de communication 6 couplé à un deuxième module de contrôle 7. Ce deuxième module de contrôle 7 est agencé de manière à analyser chaque requête primaire reçue par le module de communication 6 auquel il est couplé, et à générer en réponse une requête secondaire comportant des données qui définissent une demande de réalisation, au niveau de l'abris-bus dans lequel il est implanté, du service défini dans la requête primaire reçue.

Ces requêtes secondaires sont destinées à des autobus 8 qui empruntent les voies de circulation 5 le long desquelles sont implantés les abri-bus 3 des lignes qu'ils desservent.

Elles leurs sont transmises, dans des conditions que l'on verra plus loin, par les modules de communication 6 des abri-bus 3.

Par ailleurs, dans cet exemple les autobus 8 constituent des moyens de service mobiles. Ils sont équipés d'un module de communication 9 couplé à un troisième module de contrôle 10. Ce troisième module de contrôle 10 est agencé de manière à analyser chaque requête secondaire reçue par le module de communication 9 auquel il est couplé, et à générer en réponse un message destiné à avertir le conducteur de l'autobus dans lequel il est implanté qu'il doit s'arrêter au prochain abri-bus, comme on le verra plus loin.

Ce premier mode de mise en oeuvre de l'invention est plus particulièrement destiné aux environnements dits "d'ubiquité informatique" ou, autrement dit, aux "systèmes d'information spatiaux". De tels systèmes ou environnements sont notamment décrits dans les articles mentionnés ci-après :
- "Some computer science issues in ubiquitous computing, M.Wieser, Communication of the ACM, 36(7), p.75-83, juillet 1993;
- "Context-aware computing applications", B.N. Schilit, N. Adams et R. Want, Proceedings of the second international workshop on mobile computing systems and applications, Santa Cruz, CA, décembre 1994;
- "LIME : Lindameets mobility", G.P. Picco, A.L. Murphy et G-C. Roman, International conférence on software engineering, p.368-377, 1999;
- "SIS : A new paradigm for mobile computing systems", M. Banâtre et F. Weis, Proceedings of the information society technologies conférence (IST'99), 1999;
- "Mobilité contextuelle dans les systèmes d'information", P. Couderc, Thèse de Doctorat, Université de Rennes-1, 2001,
- "SIDE surfer : a spontaneous information discovery and exchange system", D. Touzet, J-M. Menaud, M. Banâtre, P. Couderc et F. Weis, Proceedings of the second international workshop on ubiquitous computing and communications (WUCC'01), septembre 2001.

De tels systèmes ou environnements ont pour objectif de réaliser l'intégration transparente des environnements numériques au monde physique, sans que l'utilisateur ait conscience qu'il utilise les services des calculateurs de l'environnement dans lequel il évolue. A cet effet, les tâches d'acquisition de l'environnement d'exécution, également appelé "contexte", sont déléguées à des systèmes spécialisés, comme par exemple les dispositifs de localisation de type GPS.

En raison du caractère mobile d'un utilisateur, l'ubiquité numérique repose sur des communications sans fil, généralement de portée courte, typiquement quelques mètres, à moyenne, typiquement une centaine de mètres. Par conséquent, dans ce premier exemple de réalisation, les modules de communication 1, 6 et 9 des stations mobiles MS, bornes fixes 3 et autobus 8 sont préférentiellement de portée courte ou moyenne. Ils peuvent donc être réalisés de manière à fonctionner en mode radio fréquence de type Bluetooth ou IEEE 802.11 (ou WiFi), ou encore infra-rouge, notamment.

Préférentiellement, les portées des modules de communication 1, 6 et 9 des stations mobiles MS, bornes fixes 3 et autobus 8, en émission comme en réception, sont différentes. En d'autres termes, chaque module de communication présente une zone de couverture d'émission adaptée à son mode d'alimentation électrique. Par exemple, comme illustré sur les figures 1A à 1D, le module de communication 1 de la station mobile MS présente une première zone de couverture 11 sensiblement en forme de sphère de quelques mètres de rayon, le module de communication 6 de l'abri-bus 3 présente une deuxième zone de couverture 12 sensiblement en forme de sphère de quelques dizaines à une centaine de mètres de rayon, et le module de communication 9 de l'autobus 8 présente une troisième zone de couverture 13 sensiblement en forme de sphère de quelques dizaines à une centaine de mètres de rayon. Sur les figures 1A à 1D, les enveloppes 11 à 13, qui matérialisent à titre d'exemple illustratif les différentes zones de couverture, ne sont pas à l'échelle.

Dans l'application précitée, une personne, équipée d'une station mobile MS munie d'un module de communication 1 et d'un premier module de contrôle 2, se dirige vers un abris-bus 3 d'une ligne d'autobus afin de monter dans le prochain autobus 8 desservant cette ligne dans la direction A vers B. Par exemple, l'abri-bus correspond à l'arrêt n°4 de la ligne n°6, dans la direction A vers B.

Afin que le prochain autobus 8 soit averti (via l'abri-bus 3), la personne peut sélectionner une opération dans le menu de sa station mobile MS, ou activer une touche dédiée de cette station mobile, associée à une fonction gérée par le premier module de contrôle 2 et dédiée à la génération d'une requête primaire demandant l'obtention de l'arrêt du prochain autobus 8 au niveau de l'abri-bus 3 le plus proche. On peut également envisager que la sélection d'opération(s) s'effectue par commande(s) vocale(s), ce qui est particulièrement bien adapté aux mal-voyants, notamment.

Bien entendu, la sélection de la fonction peut éventuellement requérir de l'utilisateur qu'il précise la direction dans laquelle il souhaite aller, notamment de manière à prendre en compte les situations dans lesquelles la personne ne se trouve pas sur le trottoir correspondant à la direction souhaitée.

Lorsque le premier module de contrôle 2 est averti que la fonction précitée a été sélectionnée par l'utilisateur de la station mobile MS dans laquelle il est implanté, il génère une requête primaire qu'il transmet au module de communication 1 auquel il est couplé. En fait, il crée une première valeur spatiale, par exemple <arrêt>, ou <arrêt ligne 6 A vers B> lorsque la ligne et la direction souhaitées ont été indiquées. Le module de communication 1 génère alors un message contenant cette première valeur spatiale qui est destiné à l'abri-bus 3 vers lequel la personne se dirige.

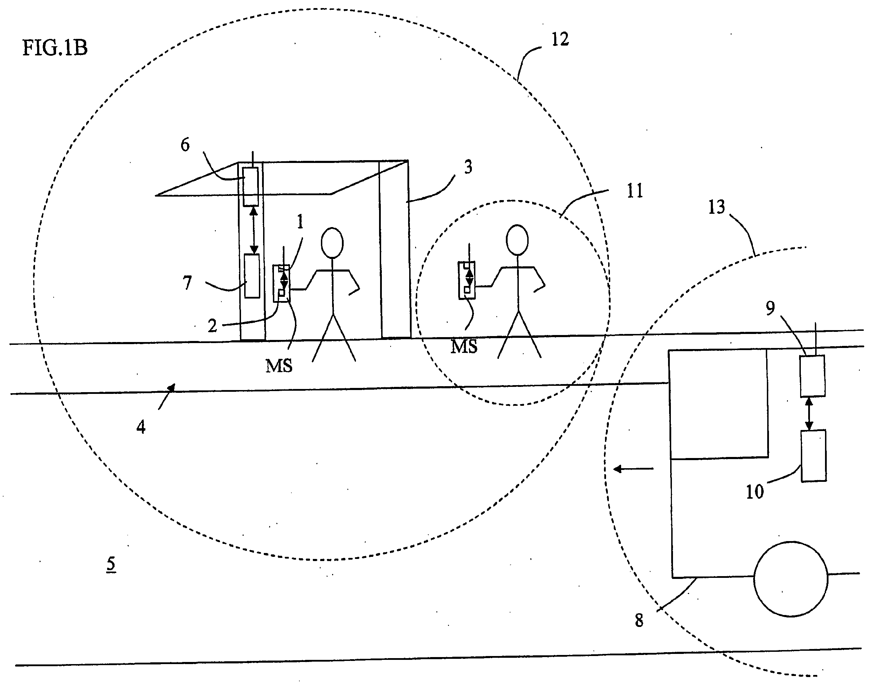

Tant que la station mobile MS n'est pas à l'intérieur de la deuxième zone de couverture 12 de l'abri-bus, comme illustré sur la figure 1A, aucun échange ne peut avoir lieu entre leurs modules de communication 1 et 6 respectifs. En revanche, lorsque la station mobile MS a complètement pénétré dans la deuxième zone de couverture 12 comme illustré sur la figure 1B, leurs modules de communication peuvent s'échanger des messages permettant de signaler au deuxième module de contrôle 7 qu'une personne requiert l'arrêt du prochain bus de la ligne n°6 (éventuellement dans la direction A vers B).

La fonction de génération de requête primaire peut être éventuellement configurée de manière à ajouter à la première valeur spatiale le type de handicap de la personne requérante (par exemple "mal-voyant" ou "personne en fauteuil roulant"). Dans ce cas, l'échange de messages entre les modules de communication peut également permettre de signaler le handicap de la personne au deuxième module de contrôle 7.

Bien entendu, lorsque le deuxième module de contrôle 7 n'est pas configuré pour la ligne n°6 et/ou pour la direction A vers B, il adresse un message au premier module de contrôle 2 de la station mobile MS, via leurs modules de communication 1 et 6 respectifs, pour lui signaler qu'il n'est pas concerné par la demande d'arrêt.

Une fois en possession de la première valeur spatiale, le deuxième module de contrôle 7 de l'abri-bus 3 génère une requête secondaire destinée à signaler au prochain autobus 8 de la ligne n° 6, qui se dirige dans la direction A vers B, qu'il doit s'arrêter pour prendre en charge une personne. Cette requête secondaire peut également indiquer le type de handicap de la personne à prendre en charge. En fait, le deuxième module de contrôle 7 crée une seconde valeur spatiale, par exemple <Bus ligne 6>, ou <Bus ligne 6 A vers B> ou encore <Bus ligne 6 mal-voyant> lorsque le handicap de la personne a été signalé. Cette seconde valeur spatiale est ensuite transmise au module de communication 6 qui génère un message qui la contient.

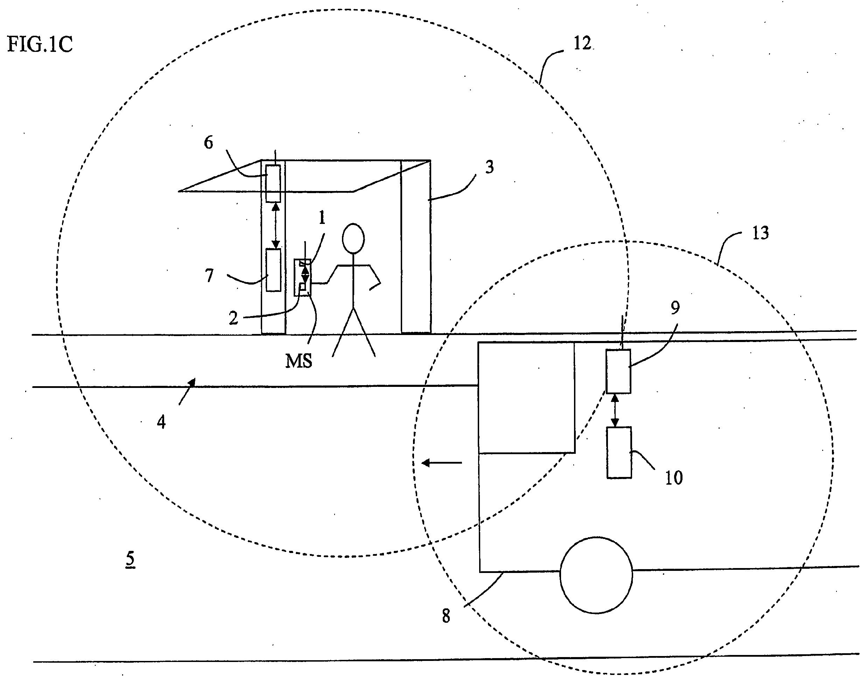

Tant que l'abri-bus 3 désigné n'est pas à l'intérieur de la troisième zone de couverture d'émission 13 d'un autobus 8, comme illustré sur là figure 1B, aucun échange ne peut avoir lieu entre leurs modules de communication 9 et 6 respectifs. En revanche, lorsque l'abri-bus 3 se trouve placé à l'intérieur de la troisième zone de couverture d'émission de l'autobus 8, comme illustré sur la figure 1C, leurs modules de communication peuvent s'échanger des messages permettant de signaler au troisième module de contrôle 10 qu'une personne, dont le type de handicap est éventuellement signalé, requiert l'arrêt de l'autobus 8, dans lequel il est implanté, au niveau du prochain abri-bus 3 de la ligne n°6. Le troisième module de contrôle 10 adresse alors un message à l'ordinateur de bord de l'autobus 8, signalant qu'il faut s'arrêter au prochain abri-bus 3 de la ligne n°6 pour prendre en charge une personne (éventuellement handicapée). La signalisation peut s'effectuer par tout moyen connu, comme par exemple par affichage du message sur un écran, ou par éclairement d'un voyant lumineux dédié. Préférentiellement, le message a également pour effet d'activer la fonction de demande d'arrêt accessible aux passagers de l'autobus 8.

Bien entendu, lorsque le troisième module de contrôle 10 n'est pas configuré pour la ligne n°6 et/ou pour la direction A vers B, il adresse un message au deuxième module de contrôle 7 de l'abri-bus 3, via leurs modules de communication 9 et 6 respectifs, pour lui signifier qu'il n'est pas concerné par la demande d'arrêt.

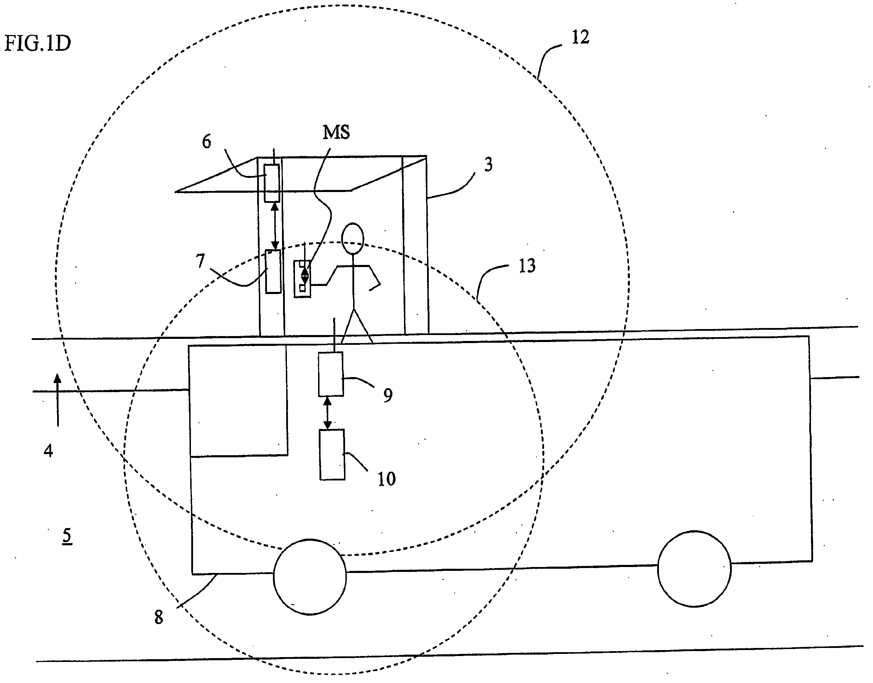

Une fois parvenu au niveau de l'abri-bus, le conducteur de l'autobus 8, alerté par la "requête secondaire", immobilise son autobus 8, comme illustré sur la figure 1D. Si la personne est handicapée, et qu'une entrée ou un aménagement spécifique est prévu(e), le conducteur peut placer son autobus de sorte que l'entrée ou l'aménagement soit disposé(e) en face de la personne ayant requis l'arrêt.

Dans ce premier exemple de réalisation, la station mobile de communication MS de l'utilisateur peut être réalisée sous la forme d'un boîtier dédié spécifiquement à l'application. Par conséquent, même s'il peut s'avérer pratique d'intégrer le module de communication 1 et le premier module de contrôle 2 dans un téléphone mobile ou un PDA (par exemple), cela n'est en aucune façon obligatoire. Une station mobile MS de type téléphone mobile, PDA ou ordinateur portable peut en revanche être indispensable lorsque le deuxième module de contrôle 7, implanté dans une borne fixe 3 (ici un abri-bus), est configuré de manière à délivrer à ladite station mobile des informations.

Le deuxième module de contrôle 7 peut en effet être agencé de manière à déterminer le temps nécessaire au prochain autobus 8, apte à assurer le service requis, pour parvenir au niveau de l'abri-bus 3. Il peut par exemple le faire en collaboration avec un serveur central qui connaît les positions de tous les autobus d'une même ligne avec une relative précision, ainsi qu'éventuellement les informations de trafic. Bien entendu, cela requiert, d'une part, que tous les abris-bus 3 soient équipés d'un module de communication radio couplé au deuxième module de contrôle 7, et d'autre part, que tous les autobus 8 soient équipés d'un dispositif de détermination de position, comme par exemple une balise GPS, couplé éventuellement à un module de communication radio.

Le deuxième module de contrôle 7 peut être également agencé de manière à délivrer aux stations mobiles MS, via leurs modules de communication 6 et 1 respectifs, des informations publicitaires et/ou des données représentatives d'adresses de sites Internet dans lesquelles des informations peuvent être obtenues. Par exemple, les informations publicitaires peuvent compléter les publicités affichées sur les parois de l'abri-bus. De même, les données d'adresses peuvent proposer à l'utilisateur d'accéder au site d'information de la société qui gère la ligne de transport ou aux sites des sociétés dont les produits et/ou marques et/ou noms sont affichés sur les parois de l'abri-bus 3.

Le deuxième module de contrôle 7 peut être également agencé de manière à délivrer aux stations mobiles MS, via leurs modules de communication 6 et 1 respectifs, des informations liées à la ville, comme par exemple des plans de quartier, des informations municipales pratiques ou culturelles, et analogues.

Toutes ces informations peuvent faire l'objet de mises à jour spontanées et locales et/ou automatisées par un serveur d'informations distant. La mise à jour spontanée et locale est plus spécifiquement liée aux informations concernant les publicités portées par les abri-bus. Elle peut être effectuée par les personnes qui viennent remplacer les publicités, par exemple à l'aide d'un terminal muni d'une interface de communication de type Bluetooth ou WiFi et capable de communiquer avec le module de contrôle 7 implanté dans la borne (ou abri-bus).

Pour assurer la fonctionnalité de communication d'informations locales, le deuxième module de contrôle 7 peut, par exemple, mettre en oeuvre les méthodes décrites dans les documents brevet FR 2 783 996 et FR 2 809 263, dont le contenu est ici incorporé par référence.

En revanche la communication d'informations à distance nécessite de coupler le deuxième module de contrôle 7 à un module de communication téléphonique raccordé à un réseau de téléphonie, de préférence de type cellulaire (par exemple de type GSM/GPRS ou UMTS).

Pour pouvoir accéder en temps réel aux sites Internet, les stations mobiles MS doivent être des matériels mobiles équipés d'un module de navigation, comme c'est notamment le cas des téléphones GSM/GPRS ou UMTS. Mais, il est également possible d'accéder en différé aux sites dont les adresses ont été fournies par le deuxième module de contrôle 7. Pour ce faire, il suffit que l'utilisateur sauvegarde les adresses dans la mémoire de sa station mobile MS. Cette solution "différée", dans laquelle on stocke les adresses pour y accéder ultérieurement, correspond plus particulièrement aux PDAs.

Dans ce qui précède, les modules de communication 1, 6 et 9, et les premiers 2, deuxièmes 7 et troisièmes 10 modules de contrôle implantés respectivement dans les stations mobiles MS, les bornes fixes 3 et les autobus 8 (ou moyens de service mobiles) constituent un premier exemple de dispositif de gestion selon l'invention.

Les modules de contrôle 2, 7 et 10 des stations mobiles MS, bornes fixes (ou abri-bus) 3 et autobus 8 peuvent être implantés dans des terminaux de communications non dédiés, comme par exemple des PDAs ou des téléphones mobiles, mais également dans des boîtiers de communication dédiés. Dans le cas particulier des personnes mal-voyantes, il n'est en effet pas utile de prévoir des moyens d'affichage d'informations, de sorte que l'on peut utiliser des boîtiers dédiés tels que des PDAs "simplifiés" dépourvus d'écran, mais équipés, de préférence, de moyens de synthèse vocale. De même, le terminal ou boîtier dédié embarqué dans un autobus ou implanté dans un abri-bus (ou borne) n'a pas besoin de comporter de moyens d'affichage. Dans le cas plus particulier des autobus, dans lesquels le conducteur doit être averti des demandes d'arrêt, un voyant lumineux peut suffire; les moyens d'affichage ne sont réellement utiles que lorsque l'on souhaite alerter le conducteur à l'aide de messages (ce qui peut servir à lui signaler le type de handicap de la personne qui requiert l'arrêt).

Par ailleurs, ces terminaux ou boîtiers de communication peuvent, par exemple, être équipés de modules de communication de type Bluetooth ou WiFi (ou IEEE 802.11). Les modules de communication de type Bluetooth étant de faible portée, ils sont peu consommateurs d'énergie. Cela les rend par conséquent bien adaptés aux terminaux (ou boîtiers dédiés) d'utilisateurs (ou stations mobiles MS).

En revanche, les modules de communication de type WiFi assurant une portée relativement importante, ils sont bien adaptés aux terminaux ou boîtiers dédiés embarqués dans les autobus ou implantés dans les abri-bus (ou bornes). Il est clair que dans l'hypothèse où les stations mobiles et les autobus ne sont pas équipés des mêmes types de moyens de communication, l'abri-bus (ou borne) doit être équipé des deux types de moyens de communication de manière à pouvoir dialoguer avec les stations mobiles et les autobus.

Par ailleurs, tout type d'environnement d'ubiquité informatique ou tout type de système d'information spatial, connu de l'homme de l'art, peut être envisagé pour permettre la mise en oeuvre de l'invention dans le cadre de ce premier exemple. Cependant, il est intéressant d'utiliser la méthode décrite ci-après, également appelée SPREAD (pour "Spatial Programming Environment for Ambient computing Design").

Dans la méthode SPREAD, on considère qu'un système d'information spatial est constitué d'un ensemble d'entités physiques (ou de représentants "électroniques" embarqués sur les entités) qui occupent chacune un espace physique de volume limité (ou zone de couverture d'émission). Par "entité physique", on entend, par exemple en référence à l'application précitée, une borne fixe ou une station mobile ou encore un autobus. A chacune de ces entités est associé un ensemble d'informations, de sorte que chaque point de l'espace physique est inclus dans un ensemble, éventuellement vide, de volumes associés à différentes entités.

L'espace physique (volumique) constitue ainsi la mémoire globale de l'architecture du système d'information spatial, qui stocke les informations accessibles.

A un instant donné, un processus implanté dans un calculateur mobile est donc associé à un point de l'espace physique. L'ensemble des informations, également appelé contexte, qui est accessible à ce processus est donc caractérisé par l'ensemble des entités pour lesquelles le point de l'espace auquel il est associé appartient à l'ensemble des volumes associés. Le contexte varie donc à chaque instant en fonction de la mobilité des processus (et donc des entités) et/ou d'une réorganisation de la mémoire globale du fait d'un déplacement explicite des "contenants" de l'information.

Comme indiqué précédemment, la portée (physique) des informations détenues par chaque entité dépend de la zone de couverture de son module de communication.

Plusieurs entités pouvant faire partie d'un processus, on utilise un mécanisme de sélection des informations associées aux différentes entités selon leurs types respectifs. Préférentiellement, cela se fait à l'aide de "tuples" et "d'espaces de tuples" introduits par le modèle Linda.

Par définition, toute information associée à une entité est caractérisée par un "tuple" qui est constitué d'une séquence d'informations typée. Par exemple, la valeur spatiale <"Autobus", 6, (17,30)> définit un tuple dont le premier élément est un entier correspondant à la chaîne autobus, le deuxième élément est un entier correspondant au numéro de la ligne d'autobus, et le troisième élément est un doublet d'entiers correspondant à l'heure estimée de passage de l'autobus au niveau du prochain abri-bus.

Grâce aux ensembles de tuples, les processus sont implicitement synchronisés sur l'état en cours des données. En d'autres termes, les ensembles de tuples reflètent l'état logique de l'environnement physique qui permet une programmation spatiale dans laquelle la structure et le contrôle de flux du système d'information sont directement dépendant des entités physiques et des relations spatiales entre ces entités physiques.

Les informations étant "stockées" dans des sous-ensembles de l'espace physique, qui constitue en quelque sorte une mémoire, il faut alors gérer l'adressage de ces informations par un processus de calcul qui est localisé en un point de l'espace physique. Ce point détermine en effet le sous-ensemble d'informations qui est utilisable par le processus de calcul lors d'une action, telle qu'un calcul arithmétique. Par conséquent, pour accéder à (ou lire) un autre sous-ensemble d'informations le processus doit se déplacer vers un autre point qui lui correspond, ou bien des entités impliquées dans le processus doivent se déplacer afin que leurs informations puissent remplir la portion de l'espace accessible audit processus.

L'adressage des informations peut se faire de façon anonyme grâce à ce que l'homme de l'art appelle un "pattern matching" entre un modèle de tuple et les éléments de l'espace des tuples. En d'autres termes, on spécifie le modèle (ou pattern) auquel correspond un tuple ou un ensemble de tuples présents dans un espace de tuples. Un modèle (ou pattern) est constitué d'un gabarit dans lequel chaque élément est soit un type (ce qui veut dire que l'élément correspond à toutes les valeurs prises par le type spécifié), soit une valeur (ce qui veut dire que l'élément correspond à la valeur spécifiée).

Pour accéder aux informations (ou tuples) contenues dans les espaces de tuples, on peut par exemple utiliser les opérations (ou primitives), définies ci-après, qui prennent en compte, d'une part, la mobilité physique des entités et des processus, et d'autre part le fait que les entités sont des objets physiques.

Une première opération appelée, par exemple, "out(tuple)" permet d'insérer (ou publier) un nouveau tuple dans l'espace des tuples d'une entité considérée. La portée de ce tuple dépend bien entendu du volume physique (ou zone de couverture) occupé(e) par l'entité qui l'émet. En d'autres termes, le tuple remplit l'espace physique (ou zone de couverture) qui entoure l'entité qui l'a émis.

Une deuxième opération appelée, par exemple, "rd(pattern)" permet de retourner, sans le détruire, un tuple correspondant au pattern (ou modèle) passé sous forme de paramètres. La portée de ce tuple retourné dépend bien entendu du volume physique (ou zone de couverture) occupé(e) par l'entité qui l'émet. Il est important de noter que le tuple n'est pas retiré de l'espace des tuples; il est simplement "lu" (ou "read"). Par ailleurs, lorsque plusieurs tuples correspondent à un modèle (ou pattern), chacun de ces tuples peut être retourné. En revanche, lorsqu'aucun tuple ne correspond pas au modèle (ou pattern), le processus se bloque.

Une troisième opération appelée, par exemple, "capture(pattern)" permet de retourner un ensemble de tuples qui correspondent au modèle (ou pattern) spécifié. La portée de cet ensemble de tuples retourné dépend bien entendu du volume physique (ou zone de couverture) occupé(e) par l'entité qui l'émet. Cette opération est une version "multiple" de l'opération "rd(pattern)". Par conséquent, lorsqu'aucun tuple ne correspond au modèle (ou pattern), le processus se bloque.

Une quatrième opération appelée, par exemple, "drop(tuple)" permet à l'entité qui a précédemment inséré (ou publié) un tuple de le retirer de l'espace des tuples correspondant.

Les opérations rd(pattern) et capture (pattern) sont préférentiellement effectuées sur l'ensemble des espaces de tuples du contexte du processus qui les exécute.

On décrit ci-après un exemple d'utilisation des opérations précitées, destiné à permettre la prise en charge d'un utilisateur au niveau d'un abri-bus.

Dans une première étape, l'utilisateur effectue une demande d'arrêt avec sa station mobile MS. Le module de contrôle 2 de la station mobile MS initie une première action A1 qui consiste à effectuer par exemple l'opération out<"p-stop",i> en vue de déclencher, d'une part, une action synchrone qui se poursuit au niveau d'une cinquième action A5, et d'autre part une action asynchrone qui se termine au niveau d'une sixième action A6, comme on le verra plus loin.

Dans une seconde étape, un abri-bus 3 prend en compte la demande de l'utilisateur. Cela nécessite qu'une double condition (ou situation) soit remplie : l'abri-bus 3 doit être inclus dans la zone de couverture d'émission 11 de la station mobile MS de l'utilisateur et le module de contrôle 2 de la station mobile MS doit avoir publié le tuple <"p-stop",i>. Si tel est le cas, le module de contrôle 7 de l'abri-bus 3 initie une action A2 qui consiste à effectuer par exemple les trois opérations suivantes rd(<"p-stop",i>), puis drop(<"ok-départ",i>), et enfin out(<"abri-bus-stop",i>). Cela déclenche une action synchrone qui se poursuit au niveau d'une huitième action A8.

Chaque tuple <"p-stop",i> donne lieu à une opération out(<"abri-bus-stop",i>) par l'abri-bus 3 lorsque la configuration spatiale des entités (station mobile MS et abri-bus 3) correspond à la double condition décrite (ou situation).

Dans une troisième étape, un bus 8i approche de l'abri-bus 3 et prend en compte la demande de cet abri-bus 3. Cela nécessite qu'une double condition (ou situation) soit remplie : le bus 8i doit être inclus dans la zone de couverture d'émission 12 de l'abri-bus 3 et le module de contrôle 7 de l'abri-bus 3 doit avoir publié le tuple <"abri-bus-stop",i>. Si tel est le cas, le module de contrôle 10 du bus 8i initie une action synchrone A3 qui consiste à effectuer par exemple les trois actions suivantes rd(<"abri-bus-stop",i>), qui se traduit par la notification au conducteur d'un message lui demandant de marquer le prochain arrêt, puis rd(<"ok-départ",i>), et enfin drop(<"départ",i>). Cette action A3 boucle infiniment sur elle-même.

Puis, lorsque le bus 8i s'arrête, la commande d'ouverture de la porte est synchronisée avec l'opération out(<"monter",i>) effectuée par le module de contrôle 10 du bus 8i dans une action synchrone A4 qui boucle infiniment sur elle-même.

Ensuite, le module de contrôle 2 de la station mobile MS de l'utilisateur initie une action synchrone A5 qui consiste à effectuer par exemple les opérations rd(<"monter",i>) et drop(<"p-stop",i>). Cette action A5 se poursuit ensuite par une nouvelle action A1.

Enfin, le module de contrôle 2 de la station mobile MS de l'utilisateur initie une action asynchrone A6 qui consiste à effectuer l'opération rd(<"monter",i>) qui déclenche, par exemple, soit l'affichage d'un message sur l'écran de sa station mobile MS, soit l'émission d'un message sonore lui signalant qu'il peut monter dans le bus 8i du fait que sa porte est désormais ouverte. Cela met fin à l'action asynchrone A1.

Dans une quatrième étape, le bus 8i quitte l'abri-bus 3. Cela nécessite qu'une double condition (ou situation) soit remplie : l'abri-bus 3 doit être inclus dans la zone de couverture d'émission 13 du bus 8i et le module de contrôle 10 du bus 8i doit avoir publié le tuple <"départ",i>. Si tel est le cas, le module de contrôle 10 du bus 8i initie une action synchrone A7 qui consiste à effectuer par exemple les deux opérations suivantes out(<"départ",i>) et drop(<"monter",i>). Cette action A7 boucle infiniment sur elle-même.

Ensuite, le module de contrôle 7 de l'abri-bus 3 initie une action A8 qui consiste à effectuer par exemple les opérations rd(<"départ",i>), puis, pour chaque tuple T=<"abri-bus-stop",i> publié lors de l'action A2, drop(T), et enfin out(<"ok-départ",i>). Cette action A8 se poursuit ensuite par une nouvelle action A2.

Dans l'exemple décrit ci-avant en référence aux figures 1A à 1D, les mécanismes d'adressage, faisant appel aux différentes opérations, sont implantés dans les modules de contrôle 2, 7 et 10 des stations mobiles MS, bornes fixes (ou abri-bus) 3 et autobus 8.

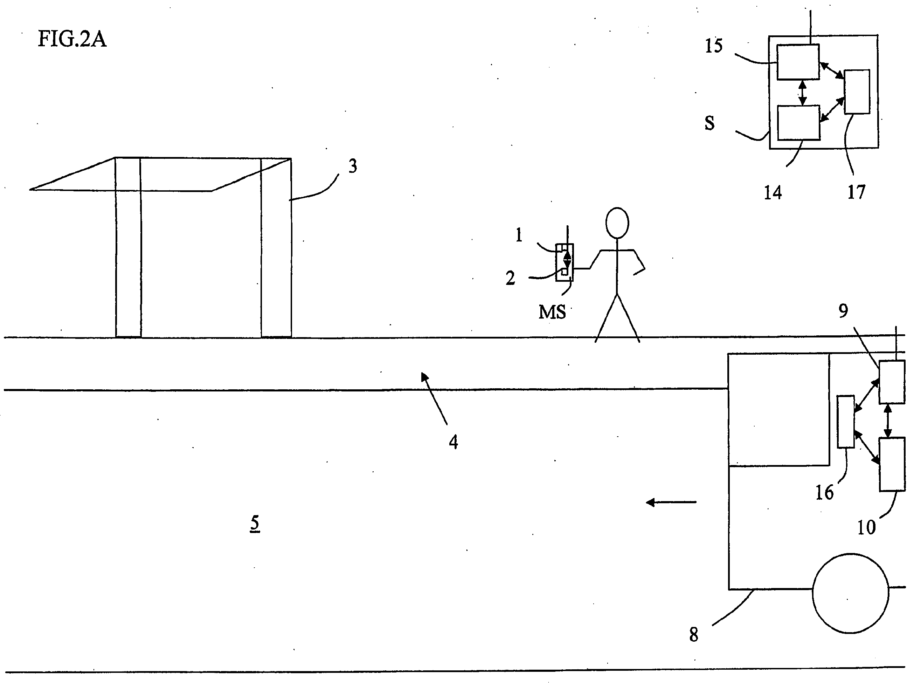

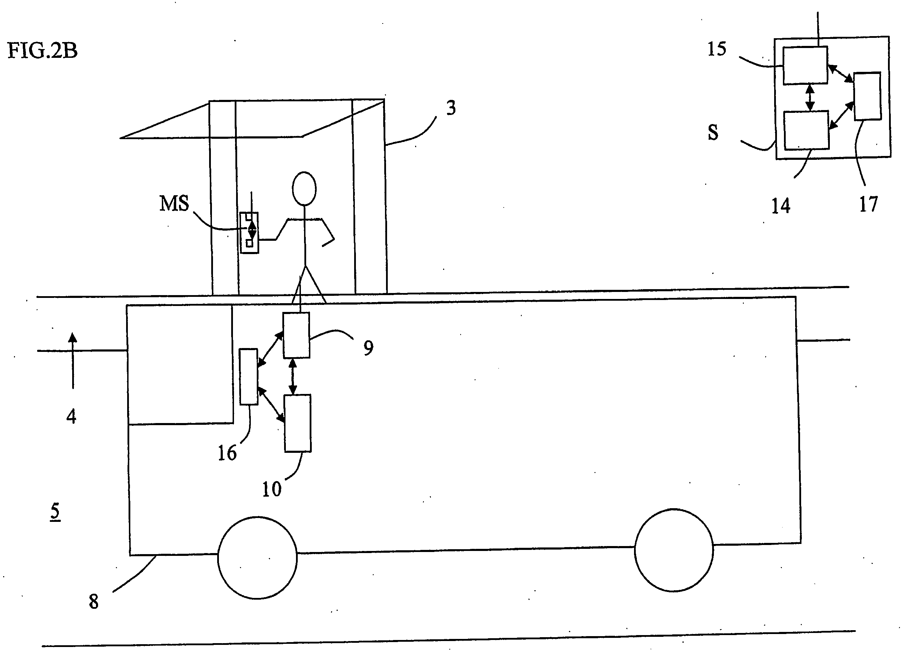

On se réfère maintenant aux figures 2A et 2B pour décrire un second exemple de mise en oeuvre de l'invention, toujours dans le cadre d'une application, non limitative, à la gestion des arrêts des autobus (ou autocars) au niveau des zones d'arrêts (ou "abri-bus") dédié(e)s des lignes qu'ils empruntent. Dans ce second exemple de réalisation, les éléments qui sont fonctionnellement équivalents ou identiques à ceux décrits dans le premier exemple de réalisation, illustré sur les figures 1A à 1D, portent les mêmes références.

Ce qui diffère entre ces deux exemples de réalisation, c'est principalement le mode d'échange de données entre les différents intervenants. Ici, les bornes fixes 3 ne présentent plus un caractère actif. Elles sont même passives. L'analyse des requêtes primaires, générées par le premier module de contrôle 2 d'une station mobile MS et délivrées par son module de communication 1, est désormais effectuée par un unique deuxième moyen de contrôle 14 couplé à un module de communication 15, tous les deux implantés dans un serveur central S contrôlé par la société de transport qui gère les lignes d'autobus.

Dans cet exemple où il n'est plus question d'échanges de messages par "interactions de proximité", les échanges de données doivent s'effectuer par voie d'ondes radio via un réseau de communications. Par conséquent les premiers 1, deuxième 15 et troisièmes 9 modules de communication, respectivement implantés dans les stations mobiles MS, le serveur S et les autobus 8, sont tous de type radio. Cette mise en oeuvre est donc particulièrement bien adaptée aux stations mobiles MS de type matériel mobile équipé d'un module de communication radio, comme par exemple les téléphones mobiles.

Une personne, équipée d'une station mobile MS munie d'un module de communication 1 et d'un premier module de contrôle 2, qui se dirige vers un abris-bus 3 (par exemple le n°4) d'une ligne d'autobus (par exemple la n°6) et souhaite avertir le prochain autobus 8, qui dessert cette ligne dans la direction A vers B, de son intention d'être pris en charge au niveau de cet abri-bus 3, doit sélectionner une opération dans le menu de sa station mobile MS, ou activer une touche dédiée de cette station mobile, associée à une fonction gérée par le premier module de contrôle 2 et dédiée à la génération d'une requête primaire demandant l'obtention de l'arrêt du prochain autobus 8 au niveau de l'abri-bus 3 le plus proche de lui.

Lorsque le premier module de contrôle 1 est averti que la fonction précitée a été sélectionnée par l'utilisateur de la station mobile MS dans laquelle il est implanté, il génère une requête primaire qu'il transmet au module de communication radio 1. Le module de communication 1 génère alors un message radio représentatif de cette requête primaire à destination du serveur S.

Dans ce mode de mise en oeuvre, le serveur doit connaître la position géographique de l'abri-bus 3 vers lequel se dirige la personne qui émet la requête primaire ainsi que le numéro de la ligne d'autobus (et éventuellement la direction) que souhaite emprunter la personne requérante. Pour ce faire, deux solutions peuvent être envisagées.

La première solution consiste à doter l'abri-bus 3 d'un identifiant inscrit sur l'une de ses parois, ou sur un support dédié, qui définit le numéro de la ligne qu'il dessert et son numéro au sein de cette ligne, ainsi qu' éventuellement la direction à laquelle il appartient. Dans ce cas, lorsque la personne sélectionne la fonction de demande d'arrêt, elle doit également fournir au premier module de contrôle 2 de sa station mobile MS l'identifiant de l'abri-bus où elle souhaite être prise en charge. Cela peut être fait par saisie à l'aide du clavier de la station mobile MS, ou oralement, en utilisant éventuellement une commande vocale. L'identifiant de l'abri-bus 3 est alors intégré dans la requête primaire qui est ensuite transmise au serveur S par le module de communication 1.

Une fois que le deuxième module de contrôle 14 du serveur S est en possession du contenu de la requête primaire, il en extrait l'identifiant pour déterminer dans une table de correspondance identifiant/position/ligne/direction la position géographique de l'abri-bus 3 et la ligne et la direction qu'il dessert.

La seconde solution consiste à doter chaque station mobile MS d'un dispositif de détermination de position, comme par exemple un module GPS, couplé au module de communication radio 1. Dans ce cas, lorsque la personne sélectionne la fonction de demande d'arrêt, le premier module de contrôle 2 de sa station mobile MS interroge le module de détermination de position pour obtenir sa position et l'intégrer dans la requête primaire qui est ensuite transmise au serveur S par le module de communication 1. Il est important de noter que lorsqu'un abri-bus dessert plusieurs lignes, l'utilisateur doit ici fournir au premier module de contrôle 2 le numéro de la ligne (et éventuellement la direction) qu'il souhaite emprunter. Cela peut être fait par saisie à l'aide du clavier de la station mobile MS, ou oralement, en utilisant éventuellement une commande vocale.

Une fois que le deuxième module de contrôle 14 du serveur S est en possession du contenu de la requête primaire, il en extrait le numéro de la ligne et éventuellement la direction) et la position de la station mobile requérante, puis recherche dans une table de positions des abri-bus la position géographique de l'abri-bus 3 qui est la plus proche de celle la station mobile MS, en tenant compte éventuellement de l'information directionnelle (A vers B).

Dans une solution comme dans l'autre, lorsque le deuxième module de contrôle 14 du serveur S est en possession de la position de l'abri-bus 3 désigné, il recherche parmi les autobus 8 de la ligne désignée, ici la n°6, celui qui est le plus près de cet abri-bus. Pour ce faire tous les autobus 8 doivent être équipés d'un dispositif de détermination de position 16, comme par exemple un module GPS, couplé au module de communication radio 1.

Deux cas peuvent être envisagés selon que les positions de chaque autobus sont, ou non, périodiquement transmises par les autobus 8 à un module 17 de gestion des positions, implanté dans le serveur S, par le biais, par exemple, de messages de type SMS (dans le cas d'un réseau de type GSM).

Lorsque c'est le cas, comme illustré sur les figures 2A et 2B, le troisième module de contrôle 14 n'a donc qu'à interroger le module de gestion 17 pour connaître les positions des autobus de la ligne n°6 qui se dirigent dans la direction A vers B (et qui sont donc aptes à assurer le service requis par l'utilisateur). Puis, il compare ces positions à la position de l'abri-bus 3 désigné de manière à déterminer l'autobus 8 qui en est le plus près.

En revanche, lorsque les autobus 8 délivrent leurs positions sur requête, le troisième module de contrôle 14 doit adresser à chaque autobus de la ligne désignée une demande de fourniture de position. Cela peut par exemple se faire à l'aide de messages de type SMS. A réception de l'ensemble des positions des autobus 8 de la ligne désignée, qui se dirigent dans la direction A vers B, le troisième module de contrôle 14 n'a donc qu'à les comparer à la position de l'abri-bus 3 désigné de manière à déterminer l'autobus qui en est le plus près.

Une fois que le module de contrôle 14 a déterminé l'autobus 8 le plus proche de l'abri-bus 3 désigné, il génère une requête secondaire destinée à signaler à cet autobus 8 qu'il doit s'arrêter pour prendre en charge une personne. Cette requête secondaire peut également indiquer le type de handicap de la personne à prendre en charge. Elle est transmise au module de communication 15 qui génère un message, par exemple de type SMS, à destination de l'autobus 8 déterminé.

Par exemple, le troisième module de contrôle 10 est implanté dans un boîtier dédié installé sur le tableau de bord de l'autobus 8 et équipé d'un équipement de signalisation, tel qu'une lampe d'avertissement. Ainsi, à réception du message, le troisième module de contrôle 10 ordonne la mise sous tension de la lampe d'avertissement de manière à signaler au conducteur de l'autobus qu'il doit s'arrêter au prochain abri-bus 3 de la ligne n°6 pour prendre en charge une personne (éventuellement handicapée).

Dans une variante, à réception du message, le troisième module de contrôle 10 adresse un message à l'ordinateur de bord de l'autobus 8 pour lui signaler qu'il faut s'arrêter au prochain abri-bus 3 de la ligne n°6 pour prendre en charge une personne (éventuellement handicapée). La signalisation peut s'effectuer par tout moyen connu, comme par exemple par affichage du message sur un écran, ou par éclairement d'un voyant lumineux dédié. Préférentiellement, le message a également pour effet d'activer la fonction de demande d'arrêt accessible aux passagers de l'autobus 8.

Une fois parvenu au niveau de l'abri-bus, le conducteur de l'autobus 8, alerté par la "requête secondaire", immobilise son autobus 8, comme illustré sur la figure 2B. Si la personne est handicapée, et qu'une entrée ou un aménagement spécifique est prévu(e), le conducteur peut placer son autobus de sorte que l'entrée ou l'aménagement soit disposé(e) en face de la personne ayant requis l'arrêt.

Dans la description du second exemple qui précède, le serveur S, les modules de communication 1, 15 et 9, les premiers 2, deuxième 14 et troisièmes 10 modules de contrôle implantés respectivement dans les stations mobiles MS, le serveur S et les autobus 8 (ou moyens de service mobiles), et les dispositifs de détermination de position 16 implantés dans les autobus 8, ainsi qu'éventuellement le dispositif de gestion 17 implanté dans le serveur S, constituent un second exemple de dispositif de gestion selon l'invention.

Par ailleurs, dans la description qui précède, il a été question de modules de contrôle 2, 10 et 14, et d'un module de gestion de position 17. Ces modules peuvent être réalisés sous la forme de circuits électroniques (hardware), de modules logiciels ou informatiques (software), ou d'une combinaison de circuits et de logiciels.

L'invention concerne également un procédé de gestion de données entre des stations mobiles d'utilisateurs équipées d'un module de communication, des bornes fixes associées à au moins un service, et une multiplicité de moyens de service mobiles équipés d'un module de communication et aptes à assurer ledit service.

Celui-ci peut être mis en oeuvre à l'aide du dispositif de gestion présenté ci-avant en référence aux figures 1 et 2. Les fonctions et sous-fonctions principales et optionnelles assurées par les étapes de ce procédé étant sensiblement identiques à celles assurées par les différents moyens constituant le dispositif de gestion, seules seront résumées ci-après les étapes mettant en oeuvre les fonctions principales du procédé selon l'invention.

Ce procédé se caractérise par les étapes suivantes :
- une première étape (a) dans laquelle on génère, à l'aide d'une station mobile d'utilisateur, une requête primaire comportant des données qui définissent une demande d'obtention d'un service choisi (comme par exemple l'arrêt d'un autobus) au niveau d'une borne (par exemple agencée en forme d'abri-bus ou d'une partie d'abri-bus) installée à proximité de la station mobile et associée au service demandé,
- une deuxième étape (b) dans laquelle, après avoir reçu la requête primaire, on génère une requête secondaire comportant des données qui définissent une demande de réalisation du service choisi au niveau de la borne proche de la station mobile,
- une troisième étape (c) dans laquelle on réceptionne la requête secondaire au niveau du moyen de service mobile le plus proche de la borne désignée, de sorte qu'il s'arrête au niveau de cette borne et assure le service demandé par l'utilisateur de la station mobile qui a émis la requête primaire.

Ce procédé peut être, notamment, mis en oeuvre dans le cadre d'un environnement d'ubiquité informatique (ou d'un système d'information spatial) dans lequel l'échange de messages s'effectue par interactions de proximité, sans détermination de position des différentes entités concernées, mais également dans un cadre plus traditionnel reposant sur l'échange de données par voie d'ondes radio via un réseau de communications, avec détermination des positions d'une partie au moins des différentes entités concernées.

L'invention ne se limite pas aux modes de réalisation de procédés et dispositifs décrits ci-avant, seulement à titre d'exemple, mais elle englobe toutes les variantes que pourra envisager l'homme de l'art dans le cadre des revendications ci-après.

Ainsi, on a décrit une application de l'invention au domaine des transports en commun. Mais, l'invention n' est pas limitée à cette application. Elle concerne également le domaine de la fourniture d'informations ou renseignements à des personnes requérantes, équipées d'une station mobile, au niveau de bornes (ou postes d'information) fixes implanté(e)s dans des lieux publics ou privés, tels que des aéroports, des gares ferroviaires ou des centres commerciaux. Dans ce cas, des personnes équipées d'un dispositif de communication, comportant un module de communication couplé à un troisième module de contrôle, constituent les moyens de service mobiles, et lorsque ces personnes reçoivent une requête secondaire elles sont averties qu' elles doivent se rendre au niveau de la borne désignée pour assurer le service requis.

## Revendications

1. Procédé de gestion de données entre des stations mobiles (MS) d'utilisateurs équipées d'un module de communication (1), des bornes fixes (3) associées à au moins un service, et une multiplicité de moyens de service mobiles (8) aptes à assurer ledit service, le procédé comprenant les étapes suivantes :
a) générer, à l'aide d'une station mobile (MS) d'utilisateur, une requête primaire comportant des données définissant une demande d'obtention d'un service choisi en une borne fixe (3) installée à proximité de la station mobile et associée audit service,
b) à réception de la requête primaire, générer une requête secondaire comportant des données définissant une demande de réalisation du service choisi au niveau de ladite borne (3),
**caractérisé en ce que** :
- les moyens de service mobiles (8) sont équipés d'un module de communication (9) ;
- à l'étape b) on réceptionne la requête primaire au niveau de la borne fixe (3), à l'aide d'un module de communication (6), on génère la requête secondaire au niveau de la borne fixe (3) et on émet la requête secondaire à l'aide de la borne dans une zone de couverture de la borne fixe, indépendamment des positions des moyens de service mobiles par rapport à la zone de couverture de la borne fixe, respectivement de la position de la borne fixe par rapport à une zone de couverture des moyens de service mobiles ;
et **en ce que** le procédé comprend l'étape suivante :
c) réceptionner la requête secondaire au niveau du moyen de service mobile (8) de ladite multiplicité qui est le plus proche de la borne fixe (3), de sorte que ce moyen de service mobile s'arrête au niveau de la borne fixe et assure le service demandé par l'utilisateur de la station mobile (MS),
et **en ce qu'**à l'étape c) le moyen de service mobile (8) réceptionne la requête secondaire lorsque la borne fixe (3) se trouve placée à l'intérieur de la zone de couverture d'émission dudit moyen de service mobile (13).

2. Procédé selon la revendication 1, selon lequel les zones de couverture de la borne fixe et des moyens de service mobiles ont un rayon respectif de quelques dizaines à une centaine de mètres.

3. Procédé selon l'une quelconque des revendications précédentes, **caractérisé en ce que** la réception de la requête primaire survient lorsque la borne fixe (3) se trouve placée à l'intérieur de la zone de couverture d'émission (12) de la station mobile (MS) qui l'a générée.

4. Procédé selon l'une quelconque des revendications précédentes, **caractérisé en ce qu'**aux étapes a) et b la génération et la réception de la requête primaire s'effectuent par échanges spontanés de messages.

5. Procédé selon la revendication 4, **caractérisé en ce que** la requête primaire comporte des données définissant une valeur spatiale primaire représentative du service choisi.

6. Procédé selon l'une des revendications précédentes, **caractérisé en ce qu'**aux étapes b) et c) la génération et la réception de la requête secondaire s'effectuent par échanges spontanés de messages.

7. Procédé selon la revendication 6, **caractérisé en ce que** la requête secondaire comporte des données définissant une valeur spatiale secondaire représentative du service choisi.

8. Procédé selon la revendication 6, **caractérisé en ce qu'**après avoir reçu la requête primaire on adresse à la station mobile (MS) des informations.

9. Procédé selon la revendication 8, **caractérisé en ce que** certaines au moins des informations sont au moins représentatives du temps nécessaire au moyen de service mobile (8) le plus proche pour s'arrêter au niveau de la borne fixe (3).

10. Procédé selon l'une des revendications 8 et 9, **caractérisé en ce que** certaines au moins des informations sont de type publicitaire.

11. Procédé selon l'une des revendications 8 à 10, **caractérisé en ce que** certaines au moins des informations comportent des données définissant au moins une adresse de site d'information accessible par Internet.

12. Procédé selon l'une des revendications 1 à 11 pour utilisation dans le domaine des transports en commun, les moyens de service mobiles (8) étant des véhicules de transport en commun, en particulier des autobus et des autocars, et les bornes fixes (3) constituant tout ou partie d'arrêts d'autobus.

13. Dispositif de gestion de données entre au moins une station mobile (MS) d'utilisateur équipée d'un module de communication (1), des bornes fixes (3) associées à au moins un service, et une multiplicité de moyens de service mobiles (8) aptes à assurer ledit service, comprenant :
i) de premiers moyens de contrôle (2) destinés à être implantés dans la station mobile (MS) d'utilisateur et agencés pour, sur ordre de l'utilisateur, générer une requête primaire comportant des données définissant une demande d'obtention d'un service choisi au niveau d'une borne fixe (3) installée à proximité de la station mobile (MS) et associée audit service,
ii) de deuxièmes moyens de contrôle (7; 14) agencés pour, à réception d'une requête primaire, générer une requête secondaire comportant des données définissant une demande de réalisation du service choisi au niveau de la borne (3),
**caractérisé en ce que** les moyens de service mobiles (8) sont équipés d'un module de communication (9; 15), **en ce que** chacune des bornes fixes (3) est équipée d'un module de communication (6) et comporte les deuxièmes moyens de contrôle (7) et **en ce que** le dispositif comprend :
iii) de troisièmes moyens de contrôle (10) implantés dans chacun des moyens de service mobiles (8) de ladite multiplicité et agencés pour, en cas de réception d'une requête secondaire par le module de communication associé (9), ordonner l'arrêt des moyens de service mobiles (8) associés au niveau de la borne fixe (3) de manière à assurer le service demandé par l'utilisateur de la station mobile (MS) ;
**en ce que** le module de communication (9) de chacun des moyens de service mobiles (8) présente une troisième zone de couverture d'émission (13) et est agencé pour réceptionner une requête secondaire lorsque ladite borne (3) se trouve placée à l'intérieur de sa troisième zone de couverture d'émission (13) ;
et **en ce que** les deuxièmes moyens de contrôle sont en outre agencés pour faire émettre la requête secondaire à l'aide de la borne dans une zone de couverture de la borne fixe, indépendamment des positions des moyens de service mobiles par rapport à la zone de couverture de la borne fixe, respectivement de la position de la borne fixe par rapport à une zone de couverture des moyens de service mobiles.

14. Dispositif selon la revendication 13, **caractérisé en ce que** les modules de communication (1,6) de la station mobile (MS) et des bornes fixes (3) présentent respectivement une première (11) et une deuxième (12) zones de couverture d'émission, et **en ce que** les modules de communication (6) des bornes fixes (3) sont agencés de manière à réceptionner une requête primaire lorsque la station mobile (MS) qui l'a générée se trouve placée à l'intérieur de leur seconde zone de couverture d'émission (12).

15. Dispositif selon l'une des revendications 13 et 14 , **caractérisé en ce que** les modules de communication (1,6) de la station mobile (MS) et des bornes fixes (3) sont respectivement agencés pour générer et réceptionner une requête primaire par échanges spontanés de messages contenant des données délivrées par lesdits premiers (2) et deuxièmes (7) moyens de contrôle.

16. Dispositif selon la revendication 15, **caractérisé en ce que** les premiers moyens de contrôle (2) sont agencés pour générer des requêtes primaires comportant des données primaires définissant une valeur spatiale primaire représentative du service choisi.

17. Dispositif selon la revendication 16, **caractérisé en ce que** les modules de communication (6,9) des bornes fixes (3) et des moyens de service mobiles (8) sont respectivement agencés pour transmettre et réceptionner une requête secondaire par échanges spontanés de messages contenant des données délivrées par lesdits deuxièmes (7) et troisièmes (10) moyens de contrôle.

18. Dispositif selon l'une des revendications 16 et 17, **caractérisé en ce que** les deuxièmes moyens de contrôle (7) sont agencés pour générer des requêtes secondaires comportant des données secondaires définissant une valeur spatiale secondaire représentative du service choisi.

19. Dispositif selon l'une des revendications 14 à 18, **caractérisé en ce que** les deuxièmes moyens de contrôle (7; 14) sont agencés pour, après avoir reçu une requête primaire, permettre la communication d'informations à ladite station mobile (MS).

20. Dispositif selon la revendication 19, **caractérisé en ce que** lesdits deuxièmes moyens de contrôle (7; 14) sont agencés pour déterminer des informations représentatives du temps nécessaire audit moyen de service mobile (8) le plus proche pour s'arrêter au niveau de ladite borne (3).

21. Dispositif selon l'une des revendications 19 et 20, **caractérisé en ce que** certaines au moins desdites informations sont de type publicitaire.

22. Dispositif selon l'une des revendications 19 à 21, **caractérisé en ce que** certaines au moins desdites informations comportent des données définissant au moins une adresse de site d'information accessible par Internet.

## Patentansprüche

1. Verfahren zur Datenverwaltung zwischen Nutzer-Mobilstationen (MS), die mit einen Kommunikationsmodul (1) ausgestattet sind, ortsfesten Stationen (3), die mindestens mit einem Dienst assoziiert sind, und einer Vielzahl von mobilen Diensteinrichtungen (8), die in der Lage sind, den Dienst sicherzustellen, wobei das Verfahren die folgenden Schritte umfasst:
a) mit Hilfe einer Nutzer-Mobilstation (MS) eine primäre Abfrage zu generieren, die Daten umfasst, die ein Ersuchen zur Erlangung eines ausgewählten Dienstes definieren, bei einer ortsfesten Station (3), die im Nahbereich der Mobilstation installiert und mit dem Dienst assoziiert ist,
b) beim Empfang der primären Abfrage eine sekundäre Abfrage zu generieren, die Daten umfasst, die ein Ersuchen zur Ausführung des ausgewählten Dienstes im Bereich dieser Station (3) definieren,
**dadurch gekennzeichnet, dass**:
- die mobilen Diensteinrichtungen (8) mit einem Kommunikationsmodul (9) ausgestattet sind;
- im Schritt b) die primäre Abfrage im Bereich des ortsfesten Station (8) mit Hilfe eines Kommunikationsmoduls (6) empfangen wird, die sekundäre Abfrage im Bereich der ortsfesten Station (3) generiert wird, und die sekundäre Abfrage mit Hilfe der Station in einem Versorgungsbereich der ortsfesten Station unabhängig von den Positionen der mobilen Diensteinrichtungen in Bezug auf den Versorgungsbereich der ortsfesten Station bzw. der Position der ortsfesten Station in Bezug auf den Versorgungsbereich der mobilen Diensteinrichtungen ausgesendet wird;
und dass das Verfahren den folgenden Schritt umfasst:
c) die sekundäre Abfrage im Bereich der mobilen Diensteinrichtung (8) derjenigen Vielzahl zu empfangen, die der ortsfesten Station (3) am nächsten ist, derart, dass diese mobile Diensteinrichtung im Bereich der ortsfesten Station stoppt und den vom Nutzer der Mobilstation (MS) erbetenen Dienst sicherstellt,
und dass im Schritt c) die mobile Diensteinrichtung (8) die sekundäre Abfrage empfängt, wenn sich die ortsfeste Station (3) im Inneren des Sendeversorgungsbereichs der mobilen Diensteinrichtung (13) angeordnet befindet.

2. Verfahren nach Anspruch 1, wobei die Versorgungsbereiche der ortsfesten Station und der mobilen Diensteinrichtungen einen jeweiligen Radius von einigen zehn bis hundert Meter haben.

3. Verfahren nach einem der vorhergehenden Ansprüche, **dadurch gekennzeichnet, dass** der Empfang der primären Abfrage erfolgt, wenn sich die ortsfeste Station (3) im Inneren des Sendeversorgungsbereichs (12) der Mobilstation (MS), die diese generiert hat, angeordnet befindet.

4. Verfahren nach einem der vorhergehenden Ansprüche, **dadurch gekennzeichnet, dass** in den Schritten a) und b) die Generierung und der Empfang der primären Abfrage durch spontane Austauschvorgänge von Nachrichten bewirkt werden.

5. Verfahren nach Anspruch 4, **dadurch gekennzeichnet, dass** die primäre Abfrage Daten umfasst, die einen primären Raumwert definieren, der für den ausgewählten Dienst repräsentativ ist.

6. Verfahren nach einem der vorhergehenden Ansprüche, **dadurch gekennzeichnet, dass** in den Schritten b) und c) die Generierung und der Empfang der sekundären Abfrage durch spontane Austauschvorgänge von Nachrichten bewirkt werden.

7. Verfahren nach Anspruch 6, **dadurch gekennzeichnet, dass** die sekundäre Abfrage Daten umfasst, die einen sekundären Raumwert definieren, der für den ausgewählten Dienst repräsentativ ist.

8. Verfahren nach Anspruch 6, **dadurch gekennzeichnet, dass**, nachdem die primäre Abfrage empfangen wurde, Informationen an die Adresse der Mobilstation (MS) gerichtet werden.

9. Verfahren nach Anspruch 8, **dadurch gekennzeichnet, dass** zumindest einige der Informationen zumindest für die Zeit repräsentativ sind, die für die nächstgelegene mobile Diensteinrichtung (8) erforderlich ist, um im Bereich der ortsfesten Station (3) zu stoppen.

10. Verfahren nach einem der Ansprüche 8 und 9, **dadurch gekennzeichnet, dass** zumindest einige der Informationen vom Typ Werbung sind.

11. Verfahren nach einem der Ansprüche 8 bis 10, **dadurch gekennzeichnet, dass** zumindest einige der Informationen Daten umfassen, die mindestens eine Informationsseitenadresse definieren, die über das Internet zugänglich ist.

12. Verfahren nach einem der Ansprüche 1 bis 11 zur Nutzung auf dem Gebiet der öffentlichen Verkehrsmittel, wobei die mobilen Diensteinrichtungen (8) öffentliche Transportfahrzeuge, insbesondere Autobusse und Reisebusse sind, und die ortsfesten Stationen (3) die gesamten oder einen Teil der Autobushaltestellen bilden.

13. Vorrichtung zur Datenverwaltung zwischen mindestens einer Nutzer-Mobilstation (MS), die mit einen Kommunikationsmodul (1) ausgestattet ist, ortsfesten Stationen (3), die mindestens mit einem Dienst assoziiert sind, und einer Vielzahl von mobilen Diensteinrichtungen (8), die in der Lage sind, den Dienst sicherzustellen, Folgendes umfassend:
i) erste Steuereinrichtungen (2), die dazu bestimmt sind, in die Nutzer-Mobilstation (MS) eingesetzt zu werden, und dazu eingerichtet sind, auf einen Befehl des Nutzers hin, eine primäre Abfrage zu generieren, die Daten umfasst, die ein Ersuchen zum Erhalten eines ausgewählten Dienstes definieren, bei einer ortsfesten Station (3), die im Nahbereich der Mobilstation (MS) installiert und mit dem Dienst assoziiert ist,
ii) zweite Steuereinrichtungen (7; 14), die dazu eingerichtet sind, beim Empfang einer primären Abfrage eine sekundäre Abfrage zu generieren, die Daten umfasst, die ein Ersuchen zur Ausführung des ausgewählten Dienstes im Bereich der Station (3) definieren,
**dadurch gekennzeichnet, dass** die mobilen Diensteinrichtungen (8) mit einem Kommunikationsmodul (9; 15) ausgestattet sind, dass jede der ortsfesten Stationen (3) mit einem Kommunikationsmodul (6) ausgestattet ist und zweite Steuereinrichtungen (7) umfasst, und dass die Vorrichtung umfasst:
iii) dritte Steuereinrichtungen (10), die in jede der mobilen Diensteinrichtungen (8) der Vielzahl eingesetzt und dazu eingerichtet sind, im Fall eines Empfangs einer sekundären Abfrage durch das assoziierte Kommunikationsmodul (9) das Stoppen der assoziierten mobilen Diensteinrichtungen (8) im Bereich der ortsfesten Station (3) anzuordnen, um den vom Benutzer der Mobilstation (MS) erbetenen Dienst sicherzustellen;
dass das Kommunikationsmodul (9) jeder der mobilen Diensteinrichtungen (8) einen dritten Sendeversorgungsbereich (13) darbietet und dazu eingerichtet ist, eine sekundäre Abfrage zu empfangen, wenn sich die Station (3) im Inneren des dritten Sendeversorgungsbereichs (13) angeordnet befindet;
und dass die zweiten Steuereinrichtungen darüber hinaus dazu eingerichtet sind, die sekundäre Abfrage mit Hilfe der Station in einem Versorgungsbereich der ortsfesten Station unabhängig von den Positionen der mobilen Diensteinrichtungen in Bezug auf den Versorgungsbereich der ortsfesten Station bzw. der Position der ortsfesten Station in Bezug auf einen Versorgungsbereich der mobilen Diensteinrichtungen aussenden zu lassen.

14. Vorrichtung nach Anspruch 13, **dadurch gekennzeichnet, dass** die Kommunikationsmodule (1, 6) der Mobilstation (MS) und der ortsfesten Stationen (3) jeweils einen ersten (11) und einen zweiten (12) Sendeversorgungsbereich darbieten, und dass die Kommunikationsmodule (6) der ortsfesten Stationen (3) so eingerichtet sind, dass sie eine primäre Abfrage empfangen, wenn die Mobilstation (MS), die diese generiert hat, sich im Inneren ihres zweiten Sendeversorgungsbereichs (12) angeordnet befindet.

15. Vorrichtung nach einem der Ansprüche 13 und 14, **dadurch gekennzeichnet, dass** die Kommunikationsmodule (1, 6) der Mobilstation (MS) und der ortsfesten Stationen (3) jeweils dazu eingerichtet sind, eine primäre Abfrage durch spontane Austauschvorgänge von Nachrichten zu generieren und zu empfangen, die Daten enthalten, die von den ersten (2) und zweiten (7) Steuereinrichtungen geliefert werden.

16. Vorrichtung nach Anspruch 15, **dadurch gekennzeichnet, dass** die ersten Steuereinrichtungen (2) dazu eingerichtet sind, primäre Abfragen zu generieren, die primäre Daten umfassen, die einen primären Raumwert definieren, der für den ausgewählten Dienst repräsentativ ist.

17. Vorrichtung nach Anspruch 16, **dadurch gekennzeichnet, dass** die Kommunikationsmodule (6, 9) der ortsfesten Stationen (3) und der mobilen Diensteinrichtungen (8) jeweils dazu eingerichtet sind, eine sekundäre Abfrage durch spontane Austauschvorgänge von Nachrichten zu senden und zu empfangen, die Daten enthalten, die von den zweiten (7) und dritten (10) Steuereinrichtungen geliefert werden.

18. Vorrichtung nach einem der Ansprüche 16 und 17, **dadurch gekennzeichnet, dass** die zweiten Steuereinrichtungen (7) dazu eingerichtet sind, sekundäre Abfragen zu generieren, die sekundäre Daten umfassen, die einen sekundären Raumwert definieren, der für den ausgewählten Dienst repräsentativ ist.

19. Vorrichtung nach einem der Ansprüche 14 bis 18, **dadurch gekennzeichnet, dass** die zweiten Steuereinrichtungen (7; 14) dazu eingerichtet sind, nachdem sie eine primäre Abfrage empfangen haben, die Mitteilung von Informationen an die Mobilstation (MS) zuzulassen.

20. Vorrichtung nach Anspruch 19, **dadurch gekennzeichnet, dass** die zweiten Steuereinrichtungen (7; 14) dazu eingerichtet sind, Informationen zu bestimmen, die für die Zeit repräsentativ sind, die für die nächstgelegene mobile Diensteinrichtung (8) erforderlich ist, um im Bereich der Station (3) zu stoppen.

21. Vorrichtung nach einem der Ansprüche 19 und 20, **dadurch gekennzeichnet, dass** zumindest einige der Informationen vom Typ Werbung sind.

22. Vorrichtung nach einem der Ansprüche 19 bis 21, **dadurch gekennzeichnet, dass** zumindest einige der Informationen Daten umfassen, die mindestens eine Informationsseitenadresse definieren, die über das Internet zugänglich ist.

## Claims

1. Method for managing data between user mobile stations (MS) equipped with a communication module (1), stationary terminals (3) associated with at least one service, and a multiplicity of mobile service means (8) adapted to ensure said service, the method including the following steps:
a) generating by means of a user mobile station (MS), a primary request including data defining a request for obtaining a selected service at a stationary terminal (3) installed proximate to the mobile station and associated with said service,
b) on receiving the primary request, generating a secondary request including data defining a request for ensuring the selected service at said terminal (3),
**characterised in that**:
- the mobile service means (8) are equipped with a communication module (9);
- at step b) the primary request is received at the stationary terminal (3), by means of a communication module (6), the secondary request is generated at the stationary terminal (3) and the secondary request is issued by means of the terminal in a coverage zone of the stationary terminal, independently of the positions of the mobile service means in relation to the coverage zone of the stationary terminal, respectively of the position of the stationary terminal in relation to a coverage zone of the mobile service means;
and **in that** the method includes the following step:
c) receiving the secondary request at the mobile service means (8) of said multiplicity that is closest to the stationary terminal (3), so that this mobile service means stops at the stationary terminal and provides the service requested by the user of the mobile station (MS),
and **in that** at step c) the mobile service means (8) receives the secondary request when the stationary terminal (3) is located within the transmission coverage zone of said mobile service means (13).

2. Method according to Claim 1, according to which the coverage zones of the stationary terminal and of the mobile service means have a respective radius ranging from several tens to a hundred metres.

3. Method according to any of the foregoing claims, **characterised in that** the reception of the primary request takes place when the stationary terminal (3) is located within the transmission coverage zone (12) of the mobile station (MS) which generated it.

4. Method according to any of the foregoing claims, **characterised in that** at steps a) and b) the generation and the reception of the primary request are accomplished by ad hoc exchanges of messages.

5. Method according to Claim 4, **characterised in that** the primary request includes data defining a primary spatial value representing the selected service.

6. Method according to any of the foregoing claims, **characterised in that** at steps b) and c) the generation and the reception of the secondary request are accomplished by ad hoc exchanges of messages.

7. Method according to Claim 6, **characterised in that** the secondary request includes data defining a secondary spatial value representing the selected service.

8. Method according to Claim 6, **characterised in that**, after receiving the primary request, information is sent to the mobile station (MS).

9. Method according to Claim 8, **characterised in that** at least some of the information at least represents the time required for the closest mobile service means (8) to stop at the stationary terminal (3).

10. Method according to any of Claims 8 and 9, **characterised in that** at least some of the information is of the advertising type.

11. Method according to any of Claims 8 to 10, **characterised in that** at least some of the information includes data defining at least one information site address accessible via the Internet.

12. Method according to any of Claims 1 to 11 for use in the field of public transport, the mobile service means (8) being public transport vehicles, in particular buses and coaches, and the stationary terminals (3) constituting all or part of bus stops.

13. Device for managing data between at least one user mobile station (MS) equipped with a communication module (1), stationary terminals (3) associated with at least one service, and a multiplicity of mobile service means (8) capable of providing said service, including:
i) first control means (2) intended to be implanted in the user mobile station (MS) and arranged to, upon the user's instruction, generate a primary request including data defining a request for obtaining a selected service at a stationary terminal (3) installed proximate to the mobile station (MS) and associated with said service,
ii) second control means (7; 14) arranged to, after receiving a primary request, generate a secondary request including data defining a request for provision of the selected service at the terminal (3),
**characterised in that** the mobile service means (8) are equipped with a communication module (9; 15), **in that** each of the stationary terminals (3) is equipped with a communication module (6) and includes the second control means (7) and **in that** the device includes:
iii) third control means (10) implanted in each of the mobile service means (8) of said multiplicity and arranged to, in case of reception of a secondary request by the associated communication module (9), order the associated mobile service means (8) to stop at the stationary terminal (3) so as to provide the service requested by the user of the mobile station (MS);
**in that** the communication module (9) of each of the mobile service means (8) has a third transmission coverage zone (13) and is arranged to receive a secondary request when said terminal (3) is located within its third transmission coverage zone (13);
and **in that** the second control means are furthermore arranged so that the secondary request is issued by means of the terminal in a coverage zone of the stationary terminal, independently of the positions of the mobile service means in relation to the coverage zone of the stationary terminal, respectively of the position of the stationary terminal in relation to a coverage zone of the mobile service means.

14. Device according to Claim 13, **characterised in that** the communication modules (1,6) of the mobile station (MS) and of the stationary terminals (3) respectively have a first (11) and a second (12) transmission coverage zones, and **in that** the communication modules (6) of the stationary terminals (3) are arranged so as to receive a primary request when the mobile station (MS) which generated it is located within their second transmission coverage zone (12).

15. Device according to any of Claims 13 and 14, **characterised in that** the communication modules (1,6) of the mobile station (MS) and of the stationary terminals (3) are respectively arranged to generate and receive a primary request by ad hoc exchanges of messages containing data delivered by said first (2) and second (7) control means.

16. Device according to Claim 15, **characterised in that** the first control means (2) are arranged to generate primary requests including primary data defining a primary spatial value representing the selected service.

17. Device according to Claim 16, **characterised in that** the communication modules (6,9) of the stationary terminals (3) and of the mobile service means (8) are respectively arranged to transmit and receive a secondary request by ad hoc exchanges of messages containing data delivered by said second (7) and third (10) control means.

18. Device according to any of Claims 16 and 17, **characterised in that** the second control means (7) are arranged to generate secondary requests including secondary data defining a secondary spatial value representing the selected service.

19. Device according to any of Claims 14 to 18, **characterised in that** the second control means (7; 14) are arranged to, after receiving a primary request, enable the communication of information to said mobile station (MS).

20. Device according to Claim 19, **characterised in that** said second control means (7; 14) are arranged to determine information representing the time required for said closest mobile service means (8) to stop at said terminal (3).

21. Method according to any of Claims 19 and 20, **characterised in that** at least some of said information is of the advertising type.

22. Method according to any of Claims 19 to 21, **characterised in that** at least some of said information includes data defining at least one information site address accessible via the Internet.
